# EUROPÄISCHE PATENTSCHRIFT

(11) **EP 2 680 057 B1**
(45) Veröffentlichungstag und Bekanntmachung des Hinweises auf die Patenterteilung: **23.09.2015**
(21) Anmeldenummer: 13173414.7
(22) Anmeldetag: 24.06.2013
(51) Int. Cl.: G02B 13/04

(54) **Weitwinkelobjektiv vom modifizierten Retrofokustyp**
Wide-angle lens of the modified retrofocus type
Objectif grand angle de type rétrofocus modifié

(30) Priorität: 28.06.2012 DE 102012105707
(43) Veröffentlichungstag der Anmeldung: 01.01.2014
(73) Patentinhaber: Leica Camera AG, 35606 Solms (DE)
(72) Erfinder: Karbe, Peter, 35638 Leun (DE); Roth, Stefan, 36381 Schlüchtern (DE)
(74) Vertreter: Stamer, Jan

(56) Entgegenhaltungen:
- EP-A1- 1 978 393
- JP-A- 2006 162 700
- US-A- 6 137 638
- US-A1- 2009 219 624
- US-A1- 2011 002 046
- US-A1- 2011 304 922

## Beschreibung

Die Erfindung betrifft ein fotografisches Weitwinkelobjektiv vom modifizierten Retrofokustyp mit den Merkmalen des Oberbegriffs des Anspruchs 1.

Aus der US 5,909,319 A ist ein Objektiv bekannt, bei dem sich die Baulänge über den gesamten Fokussierweg nicht ändert. Das Objektiv weist in Lichtrichtung von der Objektseite her gesehen eine erste Linsengruppe positiver Gesamtbrechkraft auf die eine negative Linse enthält. Die in Lichtrichtung gesehen zweite und dritte Linsengruppe bestehen je aus einem Kittglied mit negativer Brechkraft und die vierte Linsengruppe weist eine positive Brechkraft auf. Die Linsenglieder zwei und drei sind zur Fokussierung verschiebbar gelagert.

Aus der DE 33 45 987 A1 ist ein Teleobjektive bekannt, bei dem die Frontlinsengruppe positive, die Zwischenlinsengruppe negative und eine hintere Linsengruppe positive Brechkraft aufweist. Die Zwischenlinsengruppe ist in zwei Untergruppen geteilt, wobei die Fokussierung des Objektivs durch Bewegung der beiden Untergruppen zur Bildseite unter Veränderung des Abstandes zwischen den Untergruppen vorgenommen wird.

Aus US 2009/0219624 A1 ist ein Projektions-Zoom-Linsensystem bekannt, das aus einer feststehenden Frontlinsengruppe negativer Brechkraft, und einer feststehenden Hinterlinsengruppe positiver Brechkraft besteht, die vier verstellbare Zwischenlinsengruppen zur Veränderung der Brennweite von einer Weitwinkel- zu einer Tele-Einstellung einschließen. Das Zoom-Linsensystem weist auf der einer zu projizierenden Bildebene zugewandten Seite einen telezentrischen Strahlengang auf.

Fotografische Objektive vom Retrofokustyp weisen eine vom Objekt her gesehene vordere Linsengruppe negativer Brechkraft (Vordergruppe) und eine hintere Linsengruppe positiver Brechkraft (Hintergruppe) auf. Objektive vom Retrofokustyp werden auch als umgekehrter

Teleobjektivtyp bezeichnet. Zur Begrenzung der Öffnung der einfallenden Strahlenbündel ist bei diesen Objektiven eine Aperturblende üblicherweise entweder zwischen der Vordergruppe und der Hintergruppe oder innerhalb der Hintergruppe angeordnet. Bei derartigen Objektiven wird üblicherweise die gesamte, hinter der Blende angeordnete Linsengruppe (Hintergruppe) axial zur optischen Achse verschoben. Diese Art der Fokussierung bei Retrofokusobjektiven bewirkt, dass sich Bildfehler, wie astigmatische Differenz, Farbquerfehler und Bildfeldwölbung während der Fokussierung verstärken, bzw. ändern. Der Korrektionszustand des Objektivs im Nahbereich ist damit ungenügend.

Ein weiteres Problem dieser Objektive ist, dass die Fokussierwege oftmals für eine schnelle Fokussierung, wie sie z.B. für Autofokuszwecke erforderlich sind, ungeeignet sind.

Aufgabe der Erfindung war es, die bei Objektiven vom Retrofokustyp bekannte Bildfeldwölbung und den Farbquerfehler weitestgehend zu beseitigen und große Aberrationen und eine Verschlechterung der Abbildungsqualität beim Fokussieren zu vermeiden.

Eine weitere Aufgabe der Erfindung war es, einen möglichst gleichbleibenden Korrektionszustand des Objektivs über den gesamten Entfernungseinstellbereich, insbesondere jedoch im Nahbereich, bis etwa 0,4 m Objektentfernung zu gewährleisten und gleichzeitig die Eignung für Autofokuszwecke zu verbessern.

Diese Aufgaben werden bei einem fotografischen Objektiv der eingangs genannten Art durch die kennzeichnenden Merkmale des Anspruchs 1 gelöst. Vorteilhafte Ausgestaltungen ergeben sich aus den Merkmalen der Unteransprüche.

Zu den in den Ansprüchen angegebenen Lösungsmerkmalen ist zu beachten, dass beim modernen Optik-Design üblicherweise automatische Korrektionsprogramme, wie z.B. "code V" von Optical Research Associates, eingesetzt werden, die in der Lage sind, aus vorgegebenen Linsenfolgen und Brechkraftverteilungen Vorschläge für funktionsfähige Objektivsysteme mit einem für eine bestimmte Aufgabe optimiertem Korrektionszustand zu berechnen. Aufgrund gezielter Veränderungen der angegebenen Parameter durch den Optikkonstrukteur wird der automatisch erreichte Korrektionszustand jeweils weiter verbessert.

Mit den Merkmalen des Anspruchs 1 lassen sich auf diese Weise bereits die Konstruktionsdaten für Radien, Linsendicken, Linsenabstände, Brechzahlen und Abbézahlen der einzusetzenden optischen Gläser gewinnen. Bei Berücksichtigung der in den Unteransprüchen angegebenen Merkmale lassen sich die Konstruktionsparameter schrittweise gezielt verbessern.

In der Zeichnung ist ein Ausführungsbeispiel des erfindungsgemäßen Objektivs maßstäblich dargestellt. Dabei zeigt
Fig. 1 einen Linsenschnitt durch ein Objektiv bei Fokussierung auf einen Gegenstand bei unendlich.
Fig. 2a denselben Linsenschnitt durch ein Objektiv bei Fokussierung auf einen Gegenstand bei unendlich mit Abstandsangaben bei der zweiten und dritten Linsengruppe.
Fig. 2b zeigt einen Linsenschnitt durch ein Objektiv bei der Fokussierung auf einen Gegenstand im Nahbereich mit veränderten Abstandsangaben bei der zweiten und dritten Linsengruppe.

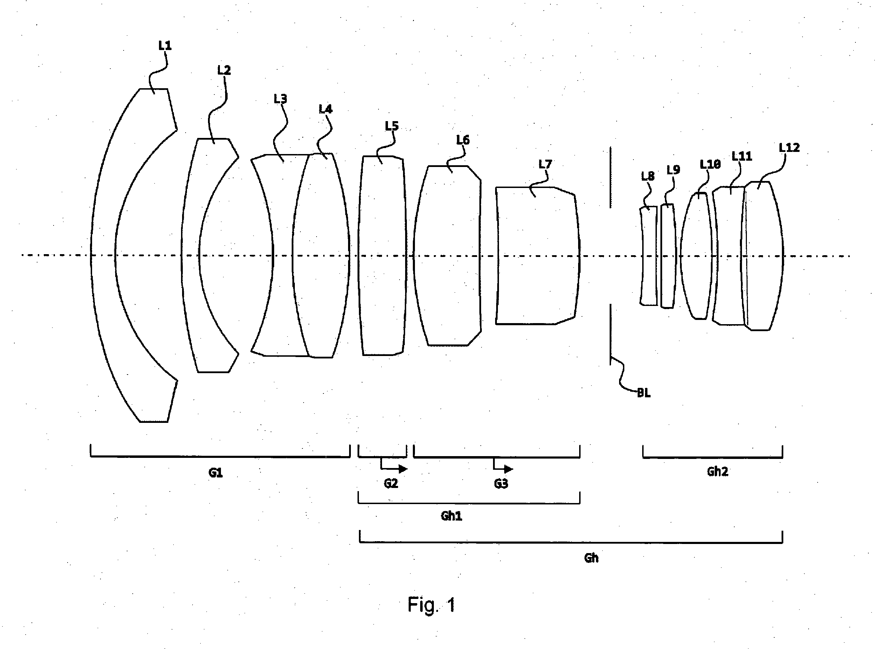

In Fig. 1 ist die Unterteilung des Objektivs in eine in Lichtrichtung gesehen vordere Linsengruppe (G1) negativer Brechkraft und eine Hintergruppe (Gh) positiver Brechkraft dargestellt, der eine nicht weiter dargestellte Bildebene zugeordnet ist. Die Hintergruppe (Gh) weist eine zur Fokussierung entlang der gestrichelt dargestellten optischen Achse verschiebbare erste Hintergruppe (Gh1) positiver Brechkraft und eine der Bildebene zugewandte zweite Hintergruppe (Gh2) positiver Brechkraft auf. Der Abstand zwischen der Vordergruppe (G1) und der zweiten Hintergruppe (Gh2) bleibt während einer Fokussierung konstant. Zwischen der ersten Hintergruppe (Gh1) und der zweiten Hintergruppe (Gh2) ist eine Aperturblende (BL) ortsfest angeordnet. Erfindungsgemäß besteht die erste Hintergruppe (Gh1) aus zwei Linsengruppen (G2,G3) positiver Brechkraft und ist zur Fokussierung von unendlich auf den Nahbereich in Richtung der zweiten Hintergruppe (Gh2) bzw. der Aperturblende (BL) verschiebbar gelagert. Die Bewegungsrichtung ist durch Pfeilangaben bei den Bezugszeichen G2 und G3 dargestellt, wobei den Pfeillängen ein unterschiedlicher Verstellweg zugeordnet ist. Ein längerer Pfeil bedeutet einen größeren Verstellweg und ein kürzerer Pfeil einen kleineren Verstellweg während der Fokussierung. Die dargestellte Pfeillänge ist nicht maßstäblich zur Strecke der Bewegung und dient lediglich der Verdeutlichung.

In einer bevorzugten Ausführungsform besteht die Vordergruppe (G1) aus vier Linsengliedern (L1,L2,L3,L4), wobei die beiden ersten Linsenglieder (L1,L2) negative Brechkraft aufweisen und das dritte und vierte Linsenglied (L3,L4) zu einem Kittglied mit schwacher negativer Gesamtbrechkraft zwischen -1 und 0 Dioptrien zusammengefasst sind. In einer alternativen Ausführungsform sind auch schwache positive Brechkräfte zwischen 0 und 1 Dioptrien realisierbar ohne ungewünschte Nachteile in der Abbildungsleistung hervorzurufen.

Die Gläser der beiden ersten Linsenglieder (L1,L2) negativer Brechkraft weisen neutrale bzw. positive anomale Teildispersion auf. Auf diese Weise lassen sich vorteilhaft sekundäre Farbquerfehler minimieren, die sich ansonsten negativ auf die Qualität der Abbildung auswirken.

Das erste und zweite Linsenglied (L1,L2) der Vordergruppe (G1) sind als konvex/konkave Menisken ausgebildet und bestehen aus hochbrechenden Gläsern (n > 1,80). Der Retrofokusaufbau mit Frontlinsen negativer Brechkraft bewirkt in der Bildebene eine große Verzeichnung. Um diese Bildfehler zu minimieren weist das erste Linsenglied (L1) auf der in Lichtrichtung ersten Seite bevorzugt eine asphärische Fläche auf. Ein weiterer Vorteil dieser asphärischen Formgebung besteht darin, dass die Hauptstrahlen für unterschiedliche Bildwinkel sehr gut örtlich voneinander getrennt auf die erste Linsenoberfläche auftreffen. Alternativ kann die Korrektion der Verzeichnung auch durch Voranstellen einer zusätzlichen Linse positiver Brechkraft anstelle der asphärischen Fläche auf der Linse (L1) erfolgen. Die Krümmungsradien der ersten und zweiten Linse (L1,L2) sind vorteilhaft derart gestaltet, dass im Ergebnis ein Objektwinkel von größer 95° erfasst wird. Diese Eigenschaften des ersten Linsengliedes (L1) und des zweiten Linsengliedes (L2) bewirken, dass die Verzeichnung über das gesamte Bildfeld sehr gut korrigiert ist.

Die asphärische Außenfläche des Linsengliedes (L1) ist als erste Linsenfläche des Objektivs den von außen einwirkenden Umwelteinflüssen besonders ausgesetzt und besteht daher in vorteilhafter Weise aus einem Glas hoher Knoophärte (>600) und hoher Säureresistenz, das heißt, es weist eine niedrige Säureresistenzklasse (SR <= 2) auf. Zusätzlich wird die Außenfläche der Linse (L1) zum Schutz mit den üblichen optischen Vergütungen, z.B. einer wasser- und schmutzabweisenden Schicht versehen.

In vorteilhafter Weise weist das dritte Linsenglied (L3) eine negative Brechkraft auf und besteht aus einem Glas mit besonders niedriger Dispersion und hoher positiver anomaler Teildispersion. Das vierte Linsenglied (L4) weist positive Brechkraft auf und besteht aus einem Glas mit mittlerer Dispersion. Bei einer Ausführungsform des dritten Linsengliedes (L3) als bi-konkave Linse und des vierten Linsengliedes (L4) mit bi-konvexer Form lässt sich besonders einfach ein Kittglied darstellen. Auf diese Weise lassen sich die üblicherweise bestehenden hohen Empfindlichkeiten im Hinblick auf Abstands-, Dicken- und Zentrierfehler der dritten und vierten Linse (L3,L4) beherrschen. Ein weiterer Vorteil der Ausführung des dritten Linsengliedes (L3) als bi-konkave Linse und des vierten Linsengliedes (L4) als bi-konvexe Linse und der Zusammenfassung in einem Kittglied besteht darin, dass der primäre Farblängsfehler und die sekundären Farbquerfehler korrigiert werden, ohne andere Bildfehler wie Wölbung und Verzeichnung zu verstärken.

In einer weiteren Ausgestaltung ist die erste Gruppe (G2) der ersten Hintergruppe (Gh1) durch eine Linse (L5) positiver Brechkraft mit einer bi-konvexen Form gebildet. Die zweite Gruppe (G3) der ersten Hintergruppe (Gh1) besteht aus zwei Linsen (L6,L7) mit je positiver Brechkraft, die eine in Lichtrichtung konvex-konkave (L6) und eine konkav-konvexe (L7) Form aufweisen. Auf diese Weise lassen sich besonders vorteilhaft die üblicherweise bei einem Retrofokusaufbau mit negativer erster Linsengruppe (G1) bedingte große Petzvalsumme und auftretende Farbquerfehler reduzieren.

Bei der Dimensionierung von Objektiven mit sehr kurzer Brennweite tendieren die Linsen positiver Brechkraft, vorliegend die der zweiten und dritten Gruppe (G2,G3) bei dem Versuch der Korrektion der Bildfeldwölbung dazu, sehr große Mittendicken aufzuweisen. Neben einer ungünstigen Verlängerung des Glasweges, der die Absorption im kurzwelligen Spektralbereich verstärkt, ergeben sich oft rechnerisch Linsendicken, die sich nicht mehr mechanisch zueinander anordnen lassen. Eine Absorption im kurzwelligen Spektralbereich hat eine gelbliche Farbwiedergabe im Bild zur Folge.

Um bei gleichzeitiger guter Korrektion der Petzvalsumme und des Farbquerfehlers die Absorption im Glasweg zu minimieren, wird in vorteilhafter Weise für die fünfte Linse (L5) der zweiten Gruppe (G2) ein Glas mit mittlerer Abbézahl (40 <= v <= 65) und für die sechste und siebte Linse (L6,L7) der zweiten Gruppe (G3) der ersten Hintergruppe (Gh1) Gläser mit geringer Abbézahl (v < 40) gewählt. Auf diese Weise wird der Farbquerfehler gut ausgeglichen.

Alternativ können zum Ausgleich des Farbquerfehlers auch einzelne der Linsenglieder (L5,L6,L7) als Kittglieder bestehend aus zwei Linsen ausgeführt werden. Auf diese Weise erhöht sich allerdings die Anzahl der Linsen im Objektiv.

Bei einer vorteilhaften Ausgestaltung des Objektivs weist die zweite Hintergruppe (Gh2) positive Gesamtbrechkraft auf und besteht aus fünf Linsengliedern (L8,L9,L10,L11,L12), mit in Lichtrichtung negativer (L8), positiver (L9) und positiver (L10) Brechkraft. Die beiden letzten Linsen (L11 ,L12) sind zur Verbesserung der Toleranzempfindlichkeit bezüglich Abstands-,Dicken- und Zentrierfehlern zu einem Kittglied mit negativer Gesamtbrechkraft zusammengefasst.

Die erste Linse (L8) der zweiten Hintergruppe (Gh2) ist eine bi-konkave Linse und besteht aus einem Glas hoher Brechzahl (hier n > 1,7) und anomaler Teildispersion. Auf diese Weise werden der sekundäre Farblängsfehler und der sekundäre Farbquerfehler korrigiert. Zum Ausgleich von sphärischen Bildfehlern, beispielsweise einer nachfolgenden Linse besonders großer positiver Brechkraft, ist die erste Linse (L8) der zweiten Hintergruppe (Gh2) in besonders vorteilhafter Weise als einseitige oder zweiseitige Asphäre ausgebildet und mit kurzem Abstand hinter der Aperturblende (BL) angeordnet.

Auf diese Weise besitzt die Linse (L8) gegenüber den übrigen Linsen des Objektivs den kleinsten Außendurchmesser und kann kostengünstig und in großen Stückzahlen als blankgepresste Asphäre gefertigt werden.

Zur Korrektur der sekundären Farblängsfehler und der sekundären Farbquerfehler bestehen die Linsen (L9,L10) positiver Brechkraft aus Gläsern mit besonders niedriger Dispersion und hoher positiver anomaler Teildispersion. Die zehnte Linse (L10) weist dabei eine besonders hohe positive Brechkraft (+28dpt) auf, während die neunte Linse (L9) eine geringere positive Brechkraft (+6dpt) aufweist. Auf diese Weise lässt sich die Petzvalsumme auf ein gutes Maß korrigieren.

Das elfte Linsenglied (L11) weist negative Brechkraft auf und ist vorteilhaft eine Linse mit bi-konkaver Form, während das zwölfte Linsenglied (L12) positive Brechkraft aufweist und als bi-konvexe Linse ausgebildet ist. Die Linsen L11 und L12 werden vorzugsweise als Kittglied zusammengefasst. In vorteilhafter Weise sind die in Lichtrichtung zweite Fläche der bi-konkaven elften Linse (L11) des Kittgliedes und die in Lichtrichtung erste Fläche der bi-konvexen zwölften Linse (L12) näherungsweise konzentrisch zum axialen Bildpunkt in der Bildebene gekrümmt. Auf diese Weise lässt sich die Verzeichnung gut korrigieren. Zur Korrektion des Farblängs- und Farbquerfehlers ist die Linse (L11) des Kittgliedes aus einem Glas mit besonders geringer Abbézahl (v < 40.0) gebildet und die bi-konvexe Linse (L12) aus einem Glas mit besonders hoher Abbézahl (v > 65.0) und positiver anomaler Teildispersion.

Die erste Hintergruppe (Gh1) wird zum Fokussieren von der Unendlich-Einstellung in Richtung Nahbereich von der Vordergruppe (G1) weg in Lichtrichtung auf die Aperturblende (BL) hin verschoben und hat die Funktion der Fokussier-Linsengruppe.

Um eine für Autofokusanwendungen besondere Eignung zu erzielen, muss der während der Fokussierung von Unendlich auf den Nahbereich zurückgelegte axiale Verstellweg der Fokussier-Linsengruppe (Gh1) möglichst kurz gewählt werden. Ein kurzer Fokushub wird dadurch realisiert, dass die Linsenglieder der Fokussier-Linsengruppe (Gh1) eine hohe Brechkraft aufweisen. Aufgrund der hohen Brechkraft ändern sich aber die Bildfehler über den Entfernungseinstellbereich erheblich. In der Fokussierstellung auf einen Gegenstand im Nahbereich führt dies zu einem ungenügenden Korrektionszustand des Objektivs. Insbesondere bei Weitwinkelobjektiven vom Retrofokustyp führt dies zu schwer korrigierbarer Bildfeldwölbung und erheblichen Farbquerfehlern.

Der Korrektionszustand des Objektivs im Nahbereich wird erfindungsgemäß dadurch verbessert, dass die beiden Linsengruppen (G2,G3) der Fokussier-Linsengruppe (Gh1) während des Fokussiervorgangs getrennt und um verschieden große Beträge verschoben werden (sogenannte Floating-Funktion).

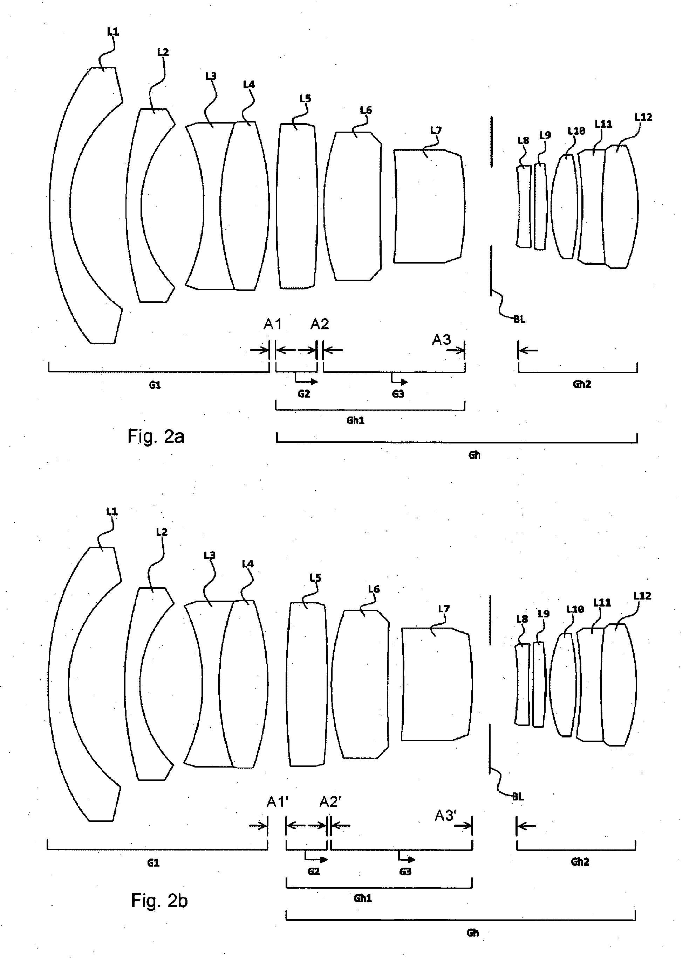

In Fig. 2a ist das Objektiv ebenso wie in Fig. 1 in der Fokussierungsstellung auf einen Gegenstand bei Unendlich dargestellt und wurde zur Verdeutlichung der Position der Fokussier-Linsengruppe Gh1 mit den Linsengruppen G2 und G3 um Abstandsangaben zwischen den Gruppen G1 und G2 (A1), G2 und G3 (A2) und G3 und Gh2 (A3) ergänzt.

In Fig. 2b ist das Objektiv in der Fokussierungsstellung auf einen Gegenstand im Nahbereich dargestellt. Der Unterschied der axialen Abstände A' der Linsengruppen G2 und G3 auf der nicht weiter dargestellten optischen Achse zeigt deutlich den kurzen Fokushub. Durch den in Fig. 2b im Vergleich zu Fig. 2a sehr eng dargestellten Abstand A2' zwischen den Linsengruppen G2 und G3 wird verdeutlicht, dass das Linsenglied G2 bei der Fokussierungsänderung von einem Objekt bei Unendlich auf ein Objekt im Nahbereich um einen größeren axialen Betrag verschoben wird, als die Linsengruppe G3. Tatsächlich wird die Linsengruppe G2 um ca. 3mm und die Linsengruppe G3 um ca. 2,5mm in Richtung der Aperturblende BL verschoben.

Der Abstand A1 zwischen der Vordergruppe (G1) und der ersten Hintergruppe (Gh1) vergrößert sich dabei auf den in Fig. 2b dargestellten Abstand A1', gleichzeitig verkleinert sich der Abstand A3 zwischen dritter Linsengruppe (G3) und zweiter Hintergruppe (Gh2) auf den Abstand A3' (s. Fig. 2b).

In Verbindung mit einer aufeinander abgestimmten Korrektion der Linsengruppen G2 und G3 über den gesamten Einstellbereich (von unendlich, bis nah) kann zusammen mit der Floatingfunktion ein gleichbleibender Korrektionszustand des Objektivs mit sich wenig ändernden Bildfehlern erzielt werden.

Die Zeichnung zeigt ein Objektiv mit der Brennweite f=24mm, einer Öffnung von1:3,5 und einem Objektwinkel von größer 95°.

### Bezugszeichenliste

- L1: asphärische Linse, Meniskus negativer Brechkraft
- L2: Linse negativer Brechkraft
- L3: bi-konkave Linse negativer Brechkraft
- L4: bi-konvexe Linse positiver Brechkraft
- L5: bi-konvexe Linse positiver Brechkraft
- L6: konvex-konkave Linse positiver Brechkraft
- L7: konkav-konvexe Linse positiver Brechkraft
- L8: asphärische bi-konkave Linse negativer Brechkraft
- L9: bi-konvexe Linse positiver Brechkraft
- L10: bi-konvexe Linse positiver Brechkraft
- L11: bi-konkave Linse negativer Brechkraft
- L12: bi-konvexe Linse positiver Brechkraft
- G1: vordere Linsengruppe
- G2,G3: Linsengruppen der Fokussier-Linsengruppe
- Gh1: erste Hintergruppe, Fokussier-Linsengruppe
- Gh2: zweite Hintergruppe
- Gh: Hintergruppe
- BL: Aperturblende

## Patentansprüche

1. Weitwinkelobjektiv vom modifizierten Retrofokustyp mit einer vom Objekt her gesehen feststehenden Vordergruppe (G1) negativer Brechkraft, einer zur Fokussierung entlang der optischen Achse verschiebbaren ersten Hintergruppe (Gh1) positiver Brechkraft, einer einer Bildebene zugewandten, feststehenden zweiten Hintergruppe (Gh2) positiver Brechkraft und einer zwischen der ersten Hintergruppe (Gh1) und der zweiten Hintergruppe (Gh2) ortsfest angeordneten Aperturblende (BL), **dadurch gekennzeichnet, dass** die erste Hintergruppe (Gh1) aus zwei Gruppen (G2,G3) positiver Brechkraft besteht, die zur Fokussierung von Unendlich auf den Nahbereich in Richtung der zweiten Hintergruppe (Gh2) getrennt verschiebbar sind wobei sich der Abstand zwischen den beiden Linsengruppen (G2,G3) der ersten Hintergruppe (Gh1) während der Fokussierung von Unendlich auf den Nahbereich verringert.

2. Weitwinkelobjektiv vom modifizierten Retrofokustyp nach Anspruch 1, **dadurch gekennzeichnet, dass** die Vordergruppe (G1) aus vier Linsengliedern (L1,L2,L3,L4) besteht, wobei die beiden ersten Linsenglieder (L1,L2) negative Brechkraft aufweisen und das dritte und vierte Linsenglied (L3,L4) zu einem Kittglied mit schwacher negativer Gesamtbrechkraft zwischen -1 und 0 Dioptrien zusammengefasst sind.

3. Weitwinkelobjektiv vom modifizierten Retrofokustyp nach Anspruch 1 oder 2, **dadurch gekennzeichnet, dass** die erste Gruppe (G2) der ersten Hintergruppe (Gh1) durch eine Linse (L5) positiver Brechkraft gebildet ist und die zweite Gruppe (G3) der ersten Hintergruppe (Gh1) zwei Linsen (L6,L7) mit je positiver Brechkraft aufweist.

4. Weitwinkelobjektiv vom modifizierten Retrofokustyp nach einem der vorherigen Ansprüche, **dadurch gekennzeichnet, dass** die zweite Hintergruppe (Gh2) positiver Gesamtbrechkraft fünf Linsenglieder (L8,L9,L10,L11,L12) aufweist, wobei die beiden letzten Linsen (L11,L12) zu einem Kittglied mit negativer Gesamtbrechkraft zusammengefasst sind bei dem das elfte Linsenglied (L11) eine negative und das zwölfte Linsenglied (L12) eine positive Brechkraft aufweisen.

5. Weitwinkelobjektiv vom modifizierten Retrofokustyp nach einem der vorherigen Ansprüche, **dadurch gekennzeichnet, dass** das erste und zweite Linsenglied (L1,L2) der Vordergruppe (G1) als konvex/konkave Menisken ausgebildet sind und hochbrechende Gläser n > 1,80 aufweisen, wobei das erste Linsenglied (L1) auf der in Lichtrichtung ersten Seite eine asphärische Fläche aufweist und aus einem Glas hoher Knoophärte > 600 und hoher Säureresistenz niedriger Säureresistenzklasse SR <= 2 besteht.

6. Weitwinkelobjektiv vom modifizierten Retrofokustyp nach einem der vorhergehenden Ansprüche, **dadurch gekennzeichnet, dass** die Krümmungsradien der ersten und zweiten Linse (L1,L2) die Erfassung eines Objektwinkels von größer 95° ermöglichen.

7. Weitwinkelobjektiv vom modifizierten Retrofokustyp nach einem der vorhergehenden Ansprüche, **dadurch gekennzeichnet, dass** das dritte Linsenglied (L3) eine negative Brechkraft aufweist und aus einem Glas mit besonders hoher Abbézahl v > 65 und hoher positiver anomaler Teildispersion besteht und das vierte Linsenglied (L4) positive Brechkraft aufweist und aus einem Glas mit mittlerer Abbézahl 65.0> v >40.0 besteht.

8. Weitwinkelobjektiv vom modifizierten Retrofokustyp nach einem der vorhergehenden Ansprüche, **dadurch gekennzeichnet, dass** die zweite Gruppe (G2) als Linse (L5) mit mittlerer Abbezahl 40 <= v <= 65 ausgebildet ist und die Linsen (L6,L7) der zweiten Gruppe (G3) der ersten Hintergruppe (Gh1) aus Gläsern mit geringer Abbézahl bestehen.

9. Weitwinkelobjektiv vom modifizierten Retrofokustyp nach einem der vorhergehenden Ansprüche, **dadurch gekennzeichnet, dass** die erste Hintergruppe (Gh1) zum Fokussieren von der Unendlich-Einstellung in Richtung Nahbereich von der Vordergruppe (G1) weg in Lichtrichtung auf die Aperturblende (BL) hinzu verschiebbar ist, wobei die erste Linsengruppe (G2) der ersten Hintergruppe (Gh1) einen größeren Weg zurücklegt, als die zweite Linsengruppe (G3) der ersten Hintergruppe (Gh1).

10. Weitwinkelobjektiv vom modifizierten Retrofokustyp nach einem der vorhergehenden Ansprüche, **dadurch gekennzeichnet, dass** die zweite Hintergruppe (Gh2) aus vier Elementen mit in Lichtrichtung negativer (L8), positiver (L9), positiver (L10) und negativer (L11,L12) Brechkraft besteht, wobei das letzte Element des Systems als Kittglied mit bi-konkaver Linse (L11) negativer und bi-konvexer Linse (L12) positiver Brechkraft ausgebildet ist.

11. Weitwinkelobjektiv vom modifizierten Retrofokustyp nach Anspruch 10, **dadurch gekennzeichnet, dass** die erste Linse (L8) der zweiten Hintergruppe (Gh2) als einseitige oder zweiseitige Asphäre mit einem gegenüber den übrigen Linsen des Objektivs kleinen Außendurchmesser ausgebildet ist und die in Lichtrichtung nachfolgenden Linsen (L9,L10) positiver Brechkraft aus Gläsern mit besonders hoher Abbézahl v > 65 und hoher positiver anomaler Teildispersion bestehen.

12. Weitwinkelobjektiv vom modifizierten Retrofokustyp nach Anspruch 10 oder 11, **dadurch gekennzeichnet, dass** die bi-konkave Linse (L11) des Kittgliedes aus einem Glas mit besonders geringer Abbézahl v < 40 und die bi-konvexe Linse (L12) aus einem Glas mit besonders hoher Abbézahl v > 65 und positiver anomaler Teildispersion besteht.

## Claims

1. Modified retrofocus-type wide-angle lens, with, as seen from the object, a fixed front group (G1) with negative refractive power, a first rear group (Gh1) with positive refractive power displaceable along the optical axis for focusing purposes, a fixed second rear group (Gh2) with positive refractive power facing an image plane, and an aperture stop (BL) arranged in stationary fashion between the first rear group (Gh1) and the second rear group (Gh2), **characterized in that** the first rear group (Gh1) consists of two groups (G2, G3) with positive refractive power, which can be displaced separately in the direction of the second rear group (Gh2) for focusing from infinity to the near-field range, wherein the distance between the two lens unit groups (G2, G3) of the first rear group (Gh1) reduces during the focusing from infinity to the near-field range.

2. Modified retrofocus-type wide-angle lens according to Claim 1, **characterized in that** the front group (G1) consists of four lens elements (L1, L2, L3, L4), wherein the first two lens elements (L1, L2) have negative refractive power and the third and fourth lens elements (L3, L4) are combined to form a cemented element with an overall weak negative refractive power between -1 and 0 diopter.

3. Modified retrofocus-type wide-angle lens according to Claim 1 or 2, **characterized in that** the first group (G2) of the first rear group (Gh1) is formed by a lens unit (L5) with positive refractive power and the second group (G3) of the first rear group (Gh1) has two lens units (L6, L7), each with positive refractive power.

4. Modified retrofocus-type wide-angle lens according to one of the preceding claims, **characterized in that** the second rear group (Gh2) with overall positive refractive power has five lens elements (L8, L9, L10, L11, L12), wherein the two last lens units (L11, L12) are combined to form a cemented element with an overall negative refractive power, in which the eleventh lens element (L11) has negative refractive power and the twelfth lens element (L12) has positive refractive power.

5. Modified retrofocus-type wide-angle lens according to one of the preceding claims, **characterized in that** the first and second lens elements (L1, L2) of the front group (G1) are formed as convex/concave meniscus lenses and have highly refractive glasses n > 1.80, wherein the first lens element (L1) has an aspherical surface on the first side in the light direction and consists of glass with a high Knoop hardness > 600 and high acid resistance low acid resistance class SR <= 2.

6. Modified retrofocus-type wide-angle lens according to one of the preceding claims, **characterized in that** the radii of curvature of the first and second lens units (L1, L2) enable the capture of an object angle of greater than 95°.

7. Modified retrofocus-type wide-angle lens according to one of the preceding claims, **characterized in that** the third lens element (L3) has negative refractive power and consists of glass with a particularly high Abbe number v > 65 and high positive anomalous partial dispersion and the fourth lens element (L4) has positive refractive power and consists of glass with a medium range Abbe number 65.0 > v > 40.0.

8. Modified retrofocus-type wide-angle lens according to one of the preceding claims, **characterized in that** the second group (G2) is embodied as a lens unit (L5) with a medium range Abbe number 40 <= v <= 65 and the lens units (L6, L7) of the second group (G3) of the first rear group (Gh1) consist of glasses with a low Abbe number.

9. Modified retrofocus-type wide-angle lens according to one of the preceding claims, **characterized in that** the first rear group (Gh1) for focusing from the infinity setting in the direction of the near-field range can be displaced away from the front group (G1) in the light direction to the aperture stop (BL), wherein the first lens unit group (G2) of the first rear group (Gh1) covers a greater distance than the second lens unit group (G3) of the first rear group (Gh1).

10. Modified retrofocus-type wide-angle lens according to one of the preceding claims, **characterized in that** the second rear group (Gh2) consists of four elements with, in the light direction, negative (L8), positive (L9), positive (L10) and negative (L11, L12) refractive power, wherein the last element of the system is embodied as a cemented element with a bi-concave lens unit (L11) with negative refractive power and a bi-convex lens unit (L12) with positive refractive power.

11. Modified retrofocus-type wide-angle lens according to Claim 10, **characterized in that** the first lens unit (L8) of the second rear group (Gh2) is embodied as a one-sided or two-sided aspherical lens with a small external diameter compared to the remaining lens units of the lens and the lens units (L9, L10), following in the light direction, with positive refractive power consist of glasses with a particularly high Abbe number v > 65 and high positive anomalous partial dispersion.

12. Modified retrofocus-type wide-angle lens according to Claim 10 or 11, **characterized in that** the bi-concave lens unit (L11) of the cemented element consists of glass with a particularly low Abbe number v < 40 and the bi-convex lens unit (L12) consists of glass with a particularly high Abbe number v > 65 and positive anomalous partial dispersion.

## Revendications

1. Objectif grand angle du type rétrofocus modifié avec un groupe antérieur (G1) à pouvoir réfringent négatif, stationnaire lorsque vu depuis l'objet, un premier groupe postérieur (Gh1) à pouvoir réfringent positif déplaçable le long de l'axe optique pour la focalisation, un deuxième groupe postérieur (Gh2) stationnaire à pouvoir réfringent positif tourné vers un plan d'image, et un diaphragme (BL) disposé de manière stationnaire entre le premier groupe postérieur (Gh1) et le deuxième groupe postérieur (Gh2),
**caractérisé en ce que** le premier groupe postérieur (Gh1) se compose de deux groupes (G2, G3) à pouvoir réfringent positif lesquels, pour la focalisation de l'infini vers le champ proche, sont déplaçables séparément en direction du deuxième groupe postérieur (Gh2), dans lequel la distance entre les deux groupes de lentilles (G2, G3) du premier groupe postérieur (Gh1) se réduit pendant la focalisation de l'infini vers le champ proche.

2. Objectif grand angle de type rétrofocus modifié selon la revendication 1, **caractérisé en ce que** le groupe antérieur (G1) se compose de quatre éléments de lentille (L1, L2, L3, L4), dans lequel les deux premiers éléments de lentille (L1, L2) présentent un pouvoir réfringent négatif et les troisième et quatrième éléments de lentille (L3, L4) étant assemblés en un élément de collage à faible pouvoir réfringent négatif global compris entre -1 et 0 dioptries.

3. Objectif grand angle du type rétrofocus modifié selon la revendication 1 ou 2, **caractérisé en ce que** le premier groupe (G2) du premier groupe postérieur (Gh1) est formé par une lentille (L5) à pouvoir réfringent positif et **en ce que** le deuxième groupe (G3) du premier groupe postérieur (Gh1) présente deux lentilles (L6, L7) avec respectivement un pouvoir réfringent positif.

4. Objectif grand angle du type rétrofocus modifié_ selon l'une des revendications précédentes, **caractérisé en ce que** le deuxième groupe postérieur (Gh2) à pouvoir réfringent global positif présente cinq éléments de lentille (L8, L9, L10, L11, L12), dans lequel les deux dernières lentilles (L11, L12) sont assemblées en un élément de collage à pouvoir réfringent global négatif où le onzième élément de lentille (L11) présente un pouvoir réfringent négatif et le douzième élément de lentille (L12), un pouvoir réfringent positif.

5. Objectif grand angle du type rétrofocus modifié selon l'une des revendications précédentes, **caractérisé en ce que** les premier et deuxième éléments de lentille (L1, L2) du groupe antérieur (G1) sont réalisés en tant que ménisques concaves/convexes et présentent des verres à indice de réfraction élevé n > 1,80, dans lequel le premier élément de lentille (L1) présente, sur la première face en direction de lumière, une surface asphérique et se compose d'un verre à dureté Knoop élevée > 600 et à résistance élevée aux acides de classe inférieure de résistance aux acides SR <= 2.

6. Objectif grand angle du type rétrofocus modifié selon l'une des revendications précédentes, **caractérisé en ce que** les rayons de courbure des première et deuxième lentilles (L1, L2) permettent la couverture d'un angle d'objet de plus de 95°.

7. Objectif grand angle du type rétrofocus modifié selon l'une des revendications précédentes, **caractérisé en ce que** le troisième élément de lentille (L3) présente un pouvoir réfringent négatif et se compose d'un verre à coefficient d'Abbe particulièrement élevé v > 65 et à dispersion partielle anormale positive élevée et **en ce que** le quatrième élément de lentille (L4) présente un pouvoir réfringent positif et se compose d'un verre à coefficient d'Abbe moyen 65,0 > v > 40,0.

8. Objectif grand angle du type rétrofocus modifié selon l'une des revendications précédentes, **caractérisé en ce que** le deuxième groupe (G2) est réalisé en tant que lentille (L5) à coefficient d'Abbe moyen 40 <= v <= 65 et **en ce que** les lentilles (L6, L7) du deuxième groupe (G3) du premier groupe postérieur (Gh1) se composent de verres à faible coefficient d'Abbe.

9. Objectif grand angle du type rétrofocus modifié selon l'une des revendications précédentes, **caractérisé en ce que**, pour la focalisation à partir du réglage à l'infini en direction du champ proche, le premier groupe postérieur (Gh1) peut être déplacé en éloignement du groupe antérieur (G1) en direction de lumière vers le diaphragme (BL), dans lequel le premier groupe de lentilles (G2) du premier groupe postérieur (Gh1) parcourt un trajet plus long que le deuxième groupe de lentilles (G3) du premier groupe postérieur (Gh1).

10. Objectif grand angle du type rétrofocus modifié selon l'une des revendications précédentes, **caractérisé en ce que** le deuxième groupe postérieur (Gh2) se compose de quatre éléments avec un pouvoir réfringent négatif (L8), positif (L9), positif (L10) et négatif (L11, L12) en direction de lumière, dans lequel le dernier élément du système est réalisé en tant qu'élément de collage avec une lentille biconcave (L11) à pouvoir réfringent négatif et une lentille biconvexe (L12) à pouvoir réfringent positif.

11. Objectif grand angle du type rétrofocus modifié selon la revendication 10, **caractérisé en ce que** la première lentille (L8) du deuxième groupe postérieur (Gh2) est réalisée en tant que lentille asphérique à une face ou deux faces avec un faible diamètre extérieur par rapport aux autres lentilles de l'objectif et **en ce que** les lentilles (L9, L10) suivantes en direction de lumière à pouvoir réfringent positif se composent de verres à coefficient d'Abbe particulièrement élevé v > 65 et à dispersion partielle anormale positive élevée.

12. Objectif grand angle du type rétrofocus modifié selon la revendication 10 ou 11, **caractérisé en ce que** la lentille biconcave (L11) de l'élément de collage se compose d'un verre avec un coefficient d'Abbe particulièrement faible v < 40 et **en ce que** la lentille biconvexe (L12) se compose d'un verre à coefficient d'Abbe particulièrement élevé v > 65 et à dispersion partielle anormale positive.
